# EUROPEAN PATENT SPECIFICATION

(11) **EP 3 395 765 B1**
(45) Date of publication and mention of the grant of the patent: **01.04.2020**
(21) Application number: 17168607.4
(22) Date of filing: 28.04.2017
(51) Int. Cl.: C02F 1/04, C02F 1/02

(54) **METHOD AND SYSTEM FOR TREATING BLACKWATER CONTAINING MEDICAL SUBSTANCES**
VERFAHREN UND SYSTEM ZUR BEHANDLUNG VON ARZNEIMITTEL ENTHALTENDEM SCHWARZWASSER
PROCÉDÉ ET SYSTÈME POUR LE TRAITMENT DES EAUX NOIRES CONTENANT DES SUBSTANCES MÉDICAMENTEUSES

(43) Date of publication of application: 31.10.2018
(73) Proprietor: Pharmalundensis AB, 223 81 Lund (SE)
(72) Inventor: Skogvall, Staffan, 224 72 LUND (SE)
(74) Representative: AWA Sweden AB

(56) References cited:
- WO-A1-2005/073136
- WO-A1-2005/115211
- US-A- 3 733 617
- US-A- 4 012 322
- US-A- 4 045 314

## Description

### TECHNICAL FIELD

The inventive concept relates to handling blackwater containing medical substances such as antibiotics and cytostatics, present in dissolved state in bodily waste (urine and feces).

### BACKGROUND

Medical substances such as antibiotics, cytostatics and non-steroid, anti-inflammatory drugs are widely used to treat sick persons. Any administered substances are absorbed into the body of the individual. Here, they circulate for some time and are subsequently excreted in original or metabolized form via the urine and feces. Eventually, the medical substances enter the sewage system. Since general waste fluid treatment plants are not designed to remove such medical substances from the incoming waste fluid, considerable amounts of medical substances end up in the environment.

In an article entitled "Selective Pressure of Antibiotic Pollution on Bacteria of Importance to Public Health", authored by A.Tello, B. Austin and T. Telfer and published in 2012 on pages 1100-1106 of Environmental Health Perspectives (Volume 120), it has been shown that even very low concentrations of antibiotics in the environment can lead to an increased prevalence of antibiotic resistant bacteria. Furthermore, it is also quite possible that development of antibiotic resistance occurs already in the waste water system. In particular, the pipes of the waste water system contain enormous numbers of bacteria. When exposed to antibiotics for a long time, they can become increasingly resistant to antibiotics.

Many patients in hospitals are severely ill and are therefore often treated with broad-spectrum antibiotics. It would be extremely unfortunate if bacteria developed resistance to these especially valuable antibiotics so that they became useless. Thus, the danger with bacterial resistance is especially valid at hospitals where a relatively large amount of broad-spectrum antibiotics is used.

In the related context, in a European Union Fact sheet (http://ec.europa.eu/research/fp7/pdf/antimicrobial_resistance_fact_sheet.pdf) it is disclosed that more than 25 000 people in the EU die each year from infections caused by drug resistant bacteria, including multi-resistant bacteria, and that antibiotic-resistant germs are regularly found in many hospitals throughout the EU, infecting 4 million patients every year.

An article entitled "Multidrug-resistant Pseudomonas aeruginosa outbreaks in two hospitals: association with contaminated hospital waste-water systems" (Breathnach AS, Cubbon MD, Karunaharan RN, Pope CF, Planche TD. J Hosp Infect. 2012 Sep;82(1):19-24. doi: 10.1016/j.jhin.2012.06.007) describes infection of hospital patients caused by multidrug-resistant bacteria present in hospital sewage systems.

An article entitled "Spread from the Sink to the Patient: in situ Study Using Green Fluorescent Protein (GFP) Expressing- Escherichia coli to Model Bacterial Dispersion from Hand Washing Sink Trap Reservoirs." (Appl Environ Microbiol. 2017 Feb 24. pii: AEM.03327-16. doi: 10.1128/AEM.03327-16. Kotay S, Chai W, Guilford W, Barry K, Mathers AJ) describes how bacteria present in the water-lock of hospital toilets may create a bio film which within seven days may emerge into the sink and infect patients. If such bacteria are resistant to antibiotics, they may cause life-threatening infections.

WO2014/011111 proposes to employ activated carbon in order to solve the problem of release of potentially harmful substances into the wastewater system.

### SUMMARY OF INVENTION

In the light of the above, it is an object of the present inventive concept to reduce the problems related to release of medical substances into sewage systems and/or the environment. Especially, the present inventive concept aims at reducing at least the problem relating to broad-spectrum antibiotics and multidrug-resistant bacteria developing therefrom.

According to a first aspect of the inventive concept, there is provided a method for isolating potentially harmful medical substances, such as antibiotics, said method comprising, in a vacuum toilet system in which blackwater ejected by vacuum from a plurality of vacuum toilets contains medical substances present in dissolved state in bodily waste:
subjecting the ejected blackwater to an initial treatment including a bacteria reduction and a fragmentation, for producing an initially treated blackwater slurry;
transferring the blackwater slurry to at least one central buffer tank and temporarily storing the blackwater slurry in said at least one central buffer tank;
transferring the blackwater slurry from said at least one buffer tank to a central vaporization unit comprising one or more vaporization chambers;
in said one or more vaporization chambers, vaporizing water from the blackwater slurry for producing a water-reduced waste material containing said potentially harmful medical substances;
transferring the water-reduced waste material into one or more replaceable waste containers;
in said one or more replaceable waste containers, vaporizing additional water from the water-reduced waste material for producing a further water-reduced waste material in the waste containers; and
removing and replacing said waste containers containing said further water-reduced waste material.

According to a second aspect of the inventive concept, there is provided a system for handling blackwater containing medical substances, such as antibiotics, said system comprising:
a plurality of vacuum toilets from which blackwater is ejected by vacuum, said blackwater containing potentially harmful medical substances present in dissolved state in bodily waste;
bacteria reduction means for subjecting the ejected blackwater to a bacteria reduction;
fragmentation means for fragmentizing the blackwater,
wherein the blackwater subjected to said bacteria reduction and said fragmentation forms a blackwater slurry;
at least one central buffer tank which is arranged downstream of the bacteria reduction means and arranged to receive and temporarily store said blackwater slurry;
a central vaporization unit which is arranged to receive said blackwater slurry from said at least one central buffer tank, said vaporization unit comprising one or more vaporization chambers arranged to vaporize water from the blackwater slurry for producing a water-reduced waste material; and
a waste handling unit which comprises one or more replaceable waste containers arranged to receive the water-reduced waste material from the vaporization unit
wherein the waste handling unit is arranged to vaporize water from waste material in the waste containers for producing a further water-reduced final waste material in said replaceable waste containers.

The inventive concept presents at least the following advantages:
- Using the inventive method and system for instance in hospitals, for handling large amounts of blackwater which may include potentially harmful medical substances present in dissolved state in bodily waste (urine and feces), makes it possible to effectively isolate such substances from the major part of the water content of the blackwater and, thereby, makes it possible to avoid that such potentially harmful medical substances enters into the public sewage system and eventually enters into the environment.
- A general aspect of the invention is to isolate unwanted substances that are dissolved in bodily waste (urine and feces) by removal of substantial amounts of water from the bodily waste. The removed water may be released to a public sewage system, whereas the remaining final waste material, which especially contains the unwanted potentially harmful substances, may subsequently be incinerated in a high temperature oven or the like. Thus, the waste material including the harmful substances may be handled in a secure way and typically the waste material may be destructed by burning.
- One advantage obtained by fragmentizing the blackwater is that the piping diameter of the system may be substantially reduced, compared to the piping normally used for toilets. Especially, the required piping of a system according to the inventive concept may have such limited dimensions and such routing possibilities that the whole system may be post-installed in a facility.
- An advantage of using vacuum toilets instead of conventional water-flushed toilets is that vacuum toilets require only a very limited amount of cleansing water for each flushing, compared to the amount of flushing water in a conventional water-flushed toilet, which uses water instead of vacuum for transport. Using vacuum toilets substantially limits the water content of the blackwater slurry to be treated and, thereby, the time and energy consumption needed for water removal by vaporization.
- A substantial advantage of subjecting the ejected blackwater to an initial bacteria reduction treatment is that this eliminates or at least substantially reduces the risk of bacteria being in constant contact with antibiotics in the piping of the system. Such constant contact may otherwise generate antibiotic resistant bacteria which could spread backwards, e.g. into hospital departments and infect patients.
- A further advantage of subjecting the ejected blackwater to an initial bacteria reduction treatment is that it eliminates or reduces the risk of the staff handling the system during normal operation or service being infected by pathogens in the piping of the system.
- The initially treated blackwater slurry, i.e. the blackwater having been subjected to the bacteria reduction and the fragmentation, is transferred to the central vaporization unit via one or more central buffer tanks arranged upstream of the central vaporization unit. The initially treated blackwater slurry is received in the buffer tank(s) from the vacuum toilets and may be temporarily stored therein. Thereafter, the blackwater slurry is transferred to the central vaporization unit. This may be performed in batches at spaced times. It may also be possible to have some continuous flow of blackwater slurry from the buffer tank to the central vaporization unit. The use of one or more buffer tanks makes it possible to avoid a frequent feeding of the blackwater slurry into an ongoing vaporization process in vaporization chambers. Every feeding of new aqueous composition into the vaporization unit may result in a reduced temperature in the vaporization chamber, resulting in a temporary halt of the vaporization process. The buffer tank(s) may preferably be isolated and heated in order to avoid bacteria growth therein. Alternative means to reduce bacteria growth may comprise for example UV treatment or chemical treatment. These alternatives may be combined with heating. A further advantage of using one or more buffer tanks is that stationary blackwater in the piping may be avoided, thereby reducing the risk of leakage.

In preferred embodiments, the blackwater is ejected from the vacuum toilets into associated bacteria reduction tanks or containers in which at least the bacteria reduction of the initial blackwater treatment is performed. In preferred embodiments, there may be provided one bacteria reduction container for each vacuum toilet in order to reduce or minimize the distance from the toilet to the bacteria reduction container. In preferred embodiments, each bacteria reduction container is located adjacent to or is integrated with the associated vacuum toilet such that the blackwater is ejected essentially directly into the bacteria reduction container from the toilet. It is preferred that the bacteria destruction occurs as high upstream as possible in the system, i.e. immediately after the bodily waste leaves the toilet. This will ensure that the system is kept with a minimum of living bacteria. The further transfer or transport of the blackwater or blackwater slurry from such a bacteria reduction container may occur at a certain time after each flushing, or as an alternative after more than one flushing. The further transfer is preferably performed by vacuum (suction).

The bacteria reduction may be performed entirely or at least partly by heating. When using bacteria reduction containers, such containers may be isolated containers that may be pre-heated or heated in response to flushing. The further transfer or transport of the blackwater or the blackwater slurry from such a bacteria reduction container may occur after each flushing, or as an alternative after more than one flushing. The further transfer is preferably performed by vacuum (suction). Alternative means for bacteria reduction may comprise for example UV-treatment or chemical treatment. These alternatives may be combined with heating.

According to the inventive concept, the blackwater ejected from the vacuum toilets is subjected to an initial treatment including also fragmentation by which the blackwater is turned into a blackwater slurry. The fragmentation, which cuts toilet paper into smaller pieces, preferably also occurs high upstream in the system close to the vacuum toilets, such that small-diameter piping may be used in a major part of the system for transferring the initially treated blackwater slurry. The bacteria reduction and the fragmentation may be performed essentially at the same time, especially in a heated bacteria reduction container as described above. However, it is also possible to perform the fragmentation at least partly before or at least partly after the bacteria reduction. There may be one fragmentation unit for each vacuum toilet. The fragmentation may also occur at least partly in pumps used for transporting the blackwater.

In the vaporization unit, the water content of the blackwater slurry may be reduced by 30% to 95%, preferably 50% to 95%, and most preferably 70% to 95%, Thereby, the water-reduced waste material produced in the vaporization unit may contain a remaining water content of 70% to 5%, preferably 50% to 5%, and most preferably 30% to 5%, of the initial water content. This remaining water content of the waste material will be sufficient to avoid major deposits in said one or more vaporization chambers of the vaporization unit. No or only minor deposits will occur. This has the advantage that the vaporization chambers may be reused.

According to the invention the water content of the waste material obtained from the vaporization unit is further reduced in one or more waste containers by vaporization, which may be performed by heating and/or by pressure reduction. This further water reduction in the waste containers may be such that the water content of the waste material contained in said waste containers is further reduced by 10% to 100%, preferably 30% to 100%, and most preferably by 50% to 100%.

Such a further water reduction of the waste material is performed before removing the waste containers from the system. It is also possible to perform a further water reduction after removing the waste containers from the system, optionally at a different location. Also, a combination thereof may be possible, e.g. performing the further water reduction partly before and partly after removing the waste containers.

Thus, a combined water-reduction in the vaporization unit and in the waste handling unit may be such that the final water content of the final waste material is 10% to 0% of the water content of the initial blackwater, preferably 5% to 0%, and most preferred 0%, i.e. a completely dry final waste material. Such a final water reduction in the waste containers may results in a very substantial reduction of the amount of produced waste material from the system. Even if such final vaporization in the waste handling unit results in an almost dry or completely dry final waste material in the waste containers, this solution has the advantage that it will cause no problems with deposits in the waste containers since the waste containers can be single-use containers which can be removed and destroyed together with the waste material.

The removed waste containers with the waste material contained therein including said potentially harmful substances, are preferably subjected to a destructive treatment, such as a high-temperature incineration process.

The number of units in each stage of the system may vary: The system may comprise an indefinite number of vacuum toilets, it may comprise more than one buffer tank, the vaporization unit may comprise an indefinite number of evaporators and there may be as many waste containers as needed.

In some embodiments, the waste handling unit may comprise a plurality of replaceable waste containers, wherein the waste material is transferred from the vaporization unit into said plurality of replaceable waste containers in sequence. This sequence may be such that one or more waste containers are being filled while water is being vaporized from waste material present in one or more previously at least partly filled waste containers. The efficiency of the final vaporization stage may thereby be increased. The sequence may comprise more than one filling/vaporization-cycle for each waste container before removing and replacing the waste container.

In some embodiments, the vacuum toilet system is a constant vacuum system (CVS). This may have the advantage of avoiding stationary blackwater in the piping. In other embodiments, the vacuum toilet system may be a vacuum on demand (VOD) system. Such systems may also be combined, for instance in connection with transferring the blackwater and the blackwater slurry to and from the bacteria reduction containers and the buffer tank.

In some embodiments, one or more pumps may be used to reduce the pressure in the vaporization unit and/or the waste handling unit, such that a below atmospheric pressure is achieved. This gives a better control of the vaporization process in relation to the boiling point. This also reduces bad smell emanating during the process.

In some embodiments, the inventive system may be connected to a waste water system, such as a public sewage system, for releasing water vapor and/or condensed water obtained from the blackwater slurry and optionally from the waste material into said waste water system.

In some embodiments, the system may comprise one or more protective structures, such as one or more demisters, arranged to prevent aerosols/droplets to pass through and, thereby, to prevent undesired substances, in particular medical ones, passing through the system. Protective structures may considerably enhance the effectiveness of the isolation process. One or more protective structures may especially be arranged in the vaporization chambers of the vaporization unit. The technical effect achieved by introducing at least one protective structure in the vaporization unit is to prevent small, mist-building droplets (aerosol) that are created in the vaporization process and dragged along with the generated vapor from leaving the vaporization chambers. The droplets/aerosol may comprise medical substances, such as antibiotics, cytostatics and non-steroid, anti-inflammatory drugs intended to be isolated in the vaporization chambers.

In embodiments of the invention where the bacteria reduction and/or the fragmentation is performed in one or more containers, such containers may also be provided with such protective structures for the same purpose.

In some embodiments, the method and the system may further comprise means for subjecting the blackwater slurry to an additional fragmentation, in addition to the initial fragmentation of the blackwater ejected from the toilets. Such an additional fragmentation of the blackwater slurry may be centrally arranged upstream of the vaporization unit, either upstream or downstream of the buffer tank, or as an alternative inside the buffer tank. The additional fragmentation may especially be arranged close to the vaporization unit. By arranging such an additional fragmentation of the blackwater slurry before it enters the vaporization unit, it may be possible to prevent or at least substantially reduce deposits of cellulose fragments (small pieces of toilet paper) on the inner walls of the vaporization chamber(s). A further advantage of arranging such a two-stage fragmentation is that the initial first local fragmentation at the vacuum toilets may be performed by less costly fragmentation units for each vacuum toilet or for each group of vacuum toilets for performing an initial fragmentation which is sufficient in terms of fragmentation degree for allowing the blackwater slurry to be transferred through small-diameter piping, whereas the second central fragmentation may be performed by a more advanced and costly equipment in a centralized manner, for achieving a finer fragmentation in order to prevent unwanted cellulose deposits in the vaporization unit.

In some embodiments, the method and the system may further comprise means for subjecting the blackwater slurry to a chemical treatment for breaking down cellulose in the blackwater slurry. Such means may be centrally arranged upstream of the vaporization unit, either upstream or downstream of the buffer tank(s). In such embodiments, the blackwater slurry may be subjected to the cellulose breakdown treatment during a suitable time period before being transferred further into the vaporization unit. Thereby, one may prevent or at least substantially reduce deposits of cellulose fragments (small pieces of toilet paper) on the inner walls of the vaporization chamber(s). Such a chemical treatment may advantageously be combined with the above-mentioned centralized additional fragmentation, which may then preferably be located upstream of the chemical treatment. As an example, the chemical treatment may include the use of cellulase or strong acids such as hydrochloric acid.

In some embodiments, the method and the system may further comprise means for removing solids from the blackwater slurry before the slurry enters the vaporization unit, for instance a decanter centrifuge arranged at the input of the vaporization unit. Such solid-matter removal means may be arranged upstream of the vaporization unit, either upstream or downstream of the buffer tank. The removed solids, mainly cellulose fragments (small toilet paper pieces) may be transferred to the waste handling unit in order to be handled together with the waste material received from the vaporization unit and may undergo further water reduction treatment.

The above and other features of the inventive concept and preferred embodiments thereof are set out in the claims and will be described further in detail below.

### Terminology

The following expressions are used for the material as it is processed in and transported through the system: The material initially ejected from the toilets is termed "ejected blackwater". After the initial treatment including bacteria reduction and fragmentation, the material is termed "initially treated blackwater slurry", or simply "blackwater slurry". The material which is obtained from the vaporization unit and is transferred to the waste handling unit is termed "water-reduced waste material". If an optional further water-reduction is performed on the waste, the final material is referred to as "further water-reduced waste material" or "final waste material".

The expression "potentially harmful medical substances" as used herein is not to interpreted as the medical substances need to be harmful per se. Rather, the expression relates also to medical substances, such as broad-spectrum antibiotics, which are indirectly potentially harmful to the environment and/or humans, especially by inducing antibiotic-resistance in bacteria.

The expression "isolating potentially harmful medical substances" as used herein is not to be interpreted in a strict sense meaning isolating only such substances from all other materials. Rather, the expression is to be interpreted in broad sense as the action of forming or producing a relatively reduced amount of waste material containing at least in part such potentially harmful medical substances, said reduced amount of waste material being isolated from the major part of the blackwater, especially evaporated water, making it possible to considerably reduce the amount of substance containing the potentially harmful medical substances.

The expression "bodily waste" as used herein is to be interpreted as bodily waste consisting of urine and feces.

The term "blackwater" as used herein is to be interpreted as a mixture comprising bodily waste (urine and feces), rinsing water applied at the vacuum toilets and optional cleansing materials (toilet paper and possible cleaning/antiseptic chemicals).

The term "bacteria reduction" as used herein is to be interpreted as a treatment destructive to bacteria, i.e. a treatment for killing or at least inactivating bacteria thereby reducing the number of viable bacteria in the blackwater or the waste material. The term should be interpreted as encompassing different degrees of bacteria destruction depending on e.g. waste volumes, applied bacteria reduction techniques, heating temperatures and heating time. In preferred embodiments, a total elimination of bacteria is preferred. Furthermore, the term "bacteria reduction" also, in a broader sense, relates to a reduction of all pathogens, including virus and fungi, as well as antibiotic resistance genes in DNA of phage particles.

The term "fragmentation" as used herein is to be interpreted as a mechanical treatment or process by which water, bodily waste and cleansing material (toilet paper as well as possible cleaning/antiseptic chemicals) are turned into a suspension consisting of a preferably heterogeneous mixture in which the particles do not dissolve but normally get suspended throughout the bulk of the medium. Especially, toilet papers may be cut or torn or in any other way reduced in size into smaller pieces. The initial fragmentation allows the fragmentized blackwater to be fed as a slurry or as a more water-like fluid through pipes having a substantially smaller diameter compared to larger-diameter sewer piping required for transporting unfragmentized blackwater in conventional water-flushed or vacuum toilet systems. Inner pipe diameters in the order of 1 to 2 cm may be possible to use for the blackwater slurry, compared to pipe diameters in the order of 4 to 5 cm or larger as used in conventional toilet systems.

The term "buffer tank" as used herein is to be interpreted as a container or tank which is arranged to receive the blackwater slurry and to temporarily store the received blackwater slurry. This makes it possible to store the blackwater slurry in the buffer tank(s) for a certain time before the blackwater slurry is thereafter transferred from the buffer tank(s) to the vaporization unit. Thereby, the blackwater slurry does not have to be continuously transferred to the vaporization unit but may rather be transferred in batches at spaced times. However, it may also be possible to have some continuous flow from the buffer tank(s) to the central vaporization unit. There may be one single central buffer tank receiving the blackwater slurry from all of the vacuum toilets of the system. There may also be more than one central buffer tank, for instance in larger systems. In such embodiments each buffer tank may be arranged to receive blackwater slurry from a sub-set of the plurality of vacuum toilets. As an alternative, a plurality of buffer tanks may be operated in sequence such that the initially treated blackwater slurry from all vacuum toilets is first transferred to a first buffer tank and, thereafter, transferred to a subsequent second buffer tank when the first buffer tank is full or when blackwater slurry is being transferred to the vaporization unit, etc. In some embodiments, the system may further comprise, in addition to said one or more central buffer tanks, local buffer tanks upstream the system closer to the vacuum toilets. Each such local buffer tank may be arranged to receive blackwater slurry from one vacuum toilet only, or from a group of vacuum toilets for temporary storage. In some embodiments, the initial fragmentation of the blackwater may be performed at least partly in such local buffer tanks, which then may receive blackwater rather than blackwater slurry.

The term "protective structure" as used herein is to be interpreted as a device arranged to block liquid (such as aerosol drops) but to allow vapor to pass through by creating a physical obstacle that hinders liquid (such as aerosol drops) but allows vapor to pass through. Thus, a protective structure is vapor permeable but prevents passage of mist-building droplets (aerosols). An example of a protective structure may include a plurality of porous, deformable filling bodies. By way of example, such bodies may be made of steel wool or polymer sponge or a corresponding porous material that hinders liquid but is permeable to gas. In other embodiments, a protective structure may comprise a metal net, such as a demister.

In this context and as is known to the person skilled in the particular technical field, these bodies could be embodied and arranged in many different ways. Hence, typical filling bodies may also include shapes such as saddles or rings, which may comprise packing, e.g. structured or knitted packing. Simple baffles are also envisaged. The term "demister" as used herein is to be interpreted as a unit made of thin steel threads or the like which operates as a grid/net/lattice for effectively preventing aerosol/droplets to pass through and enabling only for vapor to pass through the demister. This effectively prevents dissolved undesired substances, in particular medical ones, from passing through the system even if the boiling process results in the formation of large amounts of aerosol/droplets that contain dissolved medical substances.

The terms "vacuum toilet" and "vacuum toilet system" as used herein are to be interpreted in a broad sense as referring to a system using an air pressure difference as a means for the removal/flushing of bodily waste and cleansing material from the toilets of the system, resulting in a minimal requirement of water.

A vacuum toilet system may be a constant vacuum system (CVS) or a vacuum on demand (VOD) system, or a combination thereof. In preferred embodiments, "vacuum" may have its ordinary meaning in the technical field as meaning "suction". However, it may also be possible in alternative embodiments of the inventive concept to use an air pressure difference in the form of a positive air pressure rather than suction, at least at some stages in the system, for accomplishing the transport.

The terms "pipes" and "piping" as used herein are to be interpreted in a broad sense and may especially include not only conventional pipes but also flexible tubes/hoses, which in some embodiments may be the preferred option for installation.

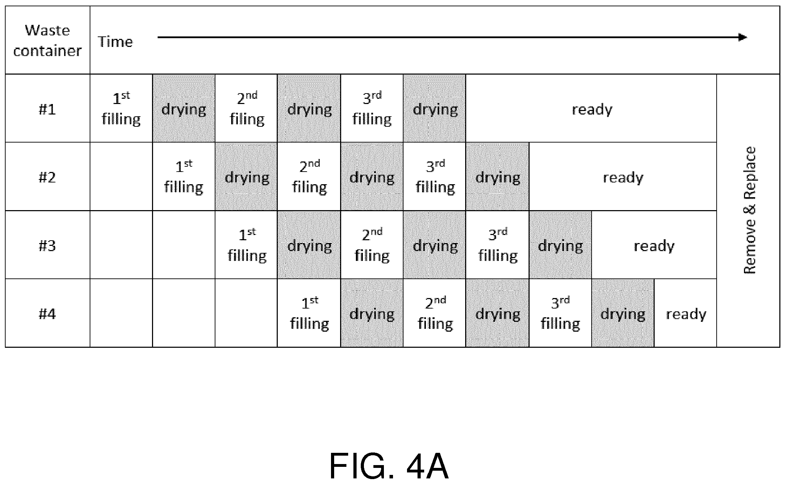

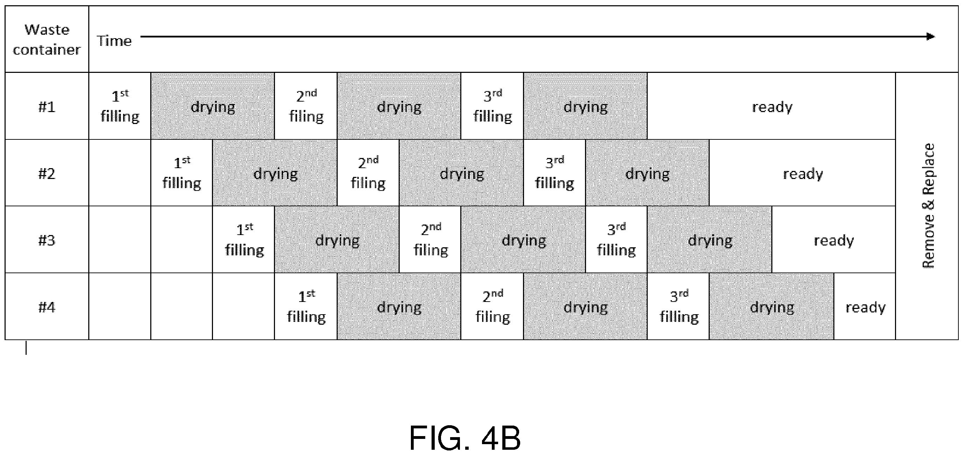

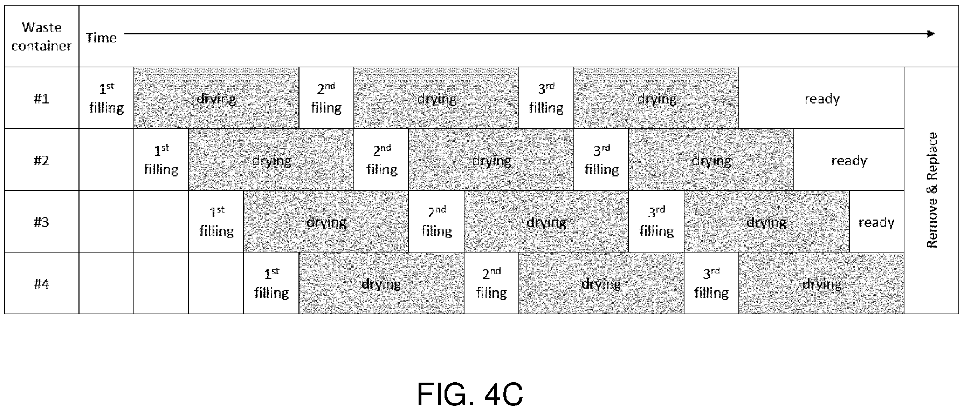

The terms "single-use waste container" and "replaceable waste container" as used herein are to interpreted as a waste container which is replaced by another waste container when full. However, it may take repeated filling/drying cycles before the container is filled to the desired level, as described below and in Fig 4. These containers may also be called waste isolation containers.

According to the inventive concept, water is vaporized from the blackwater slurry in one or more vaporization chambers of the vaporization unit. In this context, the term "blackwater slurry" is also to be interpreted to cover a solid-matter reduced material in optional embodiments in which solid matter is removed from the blackwater slurry upstream of the vaporization unit by a mechanical treatment and/or chemical treatment.

Other features and advantages of embodiments of the present invention will become apparent to those skilled in the art upon review of the following drawings, the detailed description, and the appended claims.

### BRIEF DESCRIPTION OF THE DRAWINGS

The inventive concept, some non-limiting embodiments and further advantages of the inventive concept will now be further described with reference to the drawings.
Fig. 1 schematically illustrates the main process stages of a method and a system according to an embodiment of the inventive concept.
Fig 2A and Fig. 2B schematically illustrate two alternatives of a first process stage of the system in Fig. 1.
Fig. 3 schematically illustrates an embodiment of a third process stage and a fourth process stage of the system in Fig. 1.
Fig. 4A to Fig. 4C illustrate alternative examples of waste handling in a fourth process stage of the system in Fig. 1.
Fig. 5 schematically illustrates optional further process units.
Fig. 6 is a flow chart describing an embodiment of a method according to the inventive concept.
Fig. 7 schematically illustrates an alternative waste handling.
Fig. 8 schematically illustrates a further alternative embodiment.

### DETAILED DESCRIPTION OF PREFERRED EMBODIMENTS

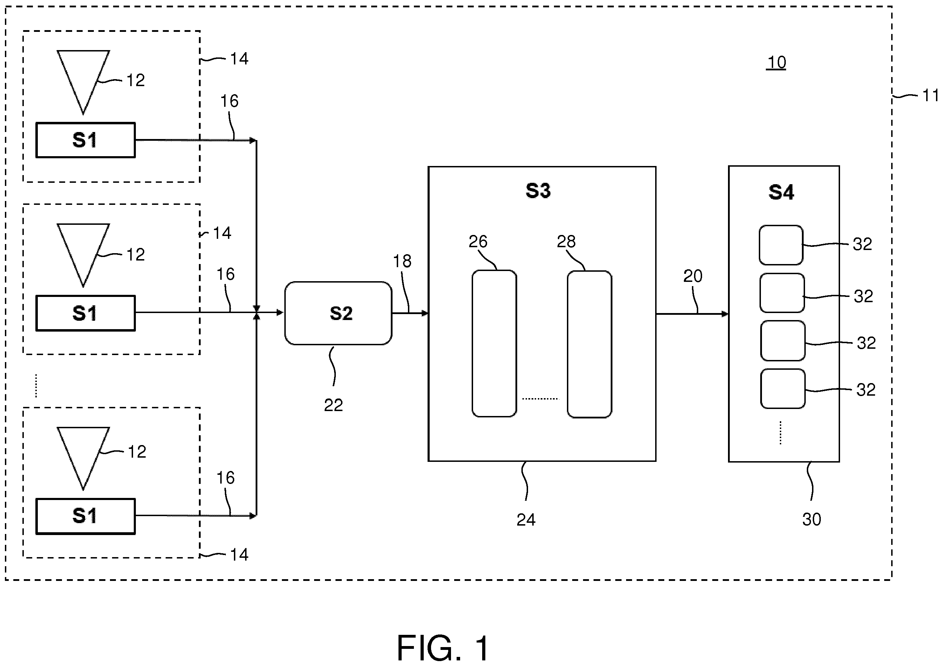

Fig. 1 schematically illustrates an example of a system 10 according to the inventive concept. As an illustrative example, the system 10 in Fig. 1 may be installed in a department or area 11 within a hospital, such as an intensive care unit or a surgery department where use is made of medical substances that may be unsuitable or harmful in the environment. Especially in the case of antibiotics there may be an increased risk for development of resistant bacteria in sewage pipes or the environment if antibiotics are present for a substantial amount of time.

The system 10 comprises a plurality of vacuum toilets 12, each vacuum toilet 12 being located in an associated toilet room 14 within the department 11. In the illustrative example in Fig. 1, the system 10 comprises four process stages S1 to S4. As an illustrative example, the vacuum toilets 12 of a system 10 may be used by 100 patients, resulting in about 500 liters of blackwater (including urine and feces, cleansing material, rinsing water and said potentially harmful substances) per day (24 hours). The blackwater flushed, i.e. ejected by vacuum, from the toilets 12 may include said potentially harmful medical substances present in a dissolved state in bodily waste.

In the first process stage S1, the blackwater ejected from the vacuum toilets 12 is subjected to an initial treatment, preferably as close as possible to the toilets 12. The first process stage S1 is preferably arranged as far upstream in the system 11 as possible and preferably entirely or at least partly directly adjacent the vacuum toilets 12. Optionally, the first process stage S1 may be at least partly integrated with the vacuum toilets 12. In the illustrated example in Fig. 1, there is a separate first process stage S1 provided for each vacuum toilet 12. The first process stage S1 may typically be arranged within the associated toilet room 14 or directly under or behind a wall of the associated toilet room 14.

One part of the first process stage S1 comprises a bacteria reduction treatment arranged to kill many or substantially all bacteria in the ejected blackwater.

In the illustrated embodiment, the bacteria reduction treatment is performed by heating. The bacteria reduction treatment is preferably performed directly after the blackwater has been ejected from the vacuum toilets 12, i.e. as soon as possible in the system close to the point where the blackwater leaves the toilet. Preferably, the blackwater is thereafter maintained in a bacteria-growth preventing heated condition throughout the system, e.g. by the use of heated piping or isolated tubes or pipes.

The bacteria reduction in process stage S1 directly after ejection from the vacuum toilets 12 should preferably be performed before transferring the blackwater to the subsequent process stages in order to reduce the risk of bacteria being present or growing in the system.

Another part of the first process stage S1 may comprise a fragmentation of the blackwater. Feces and cleansing material will be fragmentized and the resulting fragmentized blackwater could be in the form of a blackwater slurry. The fragmentation allows the blackwater slurry and the final waste material to be transferred via relatively small-diameter piping 16, 18, 20 throughout the rest of the system 10.

Possible inner piping diameter may be in the order of less than 4 cm, preferably 1 to 2 cm as an example. This is especially advantageous if the system 10 is to be post-installed in an existing hospital facility where there is often very limited space and possibilities for installing new piping systems. The fragmentation may also be performed at least partly in pumps used for blackwater transportation in the system.

The second process stage S2 of the system 10 comprises at least one central buffer tank 22, optionally a plurality of buffer tanks for larger systems, receiving the initially treated blackwater slurry from each process stage S1. The buffer tank 22 is common for all or at least a plurality of the vacuum toilets 12. The main purpose of the buffer tank 22 is to allow an orderly distribution of blackwater slurry into the ongoing vaporization process in the third process stage S3, thereby avoiding a lowering of the temperature in the evaporator and a temporary halt of the ongoing vaporization process every time a toilet is used. Optionally, the buffer tank(s) 22 may be heated.

In the illustrated example in Fig. 1, the third process stage S3 of the system 10 constitutes a central process stage for all of the vacuum toilets 12 of the department 11. The third process S3 stage may be located distantly from the vacuum toilets 12 via small-diameter vacuum piping 18. In the example shown, all of the process stages S1 to S4 of the system are located within one and the same department 11, and a similar system may be arranged for each department. As an alternative, the second process stage S2, the third process stage S3 and the fourth process stage S4 may all be located distantly from the vacuum toilets 12, for example in a basement area. Optionally, two or more departments may share a common central buffer tank (S2), a common central vaporization unit (S3) and a common central waste handling unit (S4), located for example in a basement area.

The third process stage S3 comprises a vaporization unit 24 which includes at least one vaporization chamber 26 (evaporator), preferably a plurality of vaporization stages. In this example, the vaporization unit 24 includes two vaporization chambers 26, 28, each vaporization chamber 26, 28 forming a respective vaporization stage of the third process stage S3. The vaporization chambers 26, 28 are preferably reusable chambers since the system may be designed such that major deposits therein can be avoided. The second vaporization chamber 28 forms a second vaporization stage in the unit 24 and may in other embodiment be implemented as a plurality of vaporization chambers, operating in parallel or in series. The blackwater slurry is received from the buffer tank 22, preferably by suction by means of a vacuum pump.

In the vaporization chambers 26, 28, the blackwater slurry is subjected to a vaporization treatment at such temperatures as to convert water contained in the blackwater slurry into vapor. The water vapor is removed from the vaporization chambers and may be condensed and typically discharged into an ambient waste water system, e.g. a public sewage system. Optionally, as described further below, at least some of the hot vapor generated in the first vaporization chamber 26 may be used for heating subsequent vaporization stages in the system. The output from the vaporization unit 24 at piping 20 constitutes a water-reduced blackwater slurry, now referred to as a water-reduced waste material, which especially also contains the potentially harmful medical substances to be isolated. This water-reduced waste material is transferred to the fourth process stage S4, preferably by one or more vacuum pumps.

In a multi-stage vaporization unit 24 as in this embodiment, the water content of the initially treated blackwater slurry is reduced further in each vaporization stage. The optimal degree of evaporation depends on several factors, e.g. the ability to pump the material. The resulting waste output from the vaporization unit 24 is in the form of a waste material having a substantially reduced water content compared to the initially ejected blackwater.

The fourth process stage S4 of the system 10 comprises a waste handling unit 30 including at least one replaceable waste container 32, preferably a plurality of replaceable, single-use waste containers 32.

The replaceable waste containers 32 may be single-use containers such that each container 32 is used only once and thereafter replaced and destructed together with the final waste material therein. The single-use aspect is especially relevant for the inventive concept because a further water reduction is performed in the waste containers, potentially resulting in hard deposits in the waste containers 32. In the example illustrated in Fig. 1, the waste handling unit 30 comprises four waste containers 32, but any number such as ten, twenty or more is possible depending on the system size and system capacity.

In the fourth process stage S4, additional water is vaporized from the waste material present in the waste containers 32, for producing a further water-reduced final waste material in the waste containers 32.

The waste material may preferably be transferred from the vaporization unit 24 to the individual waste containers 32 in sequence as will be described in further detail below. After having been subjected to final treatment in the waste containers 32, the final waste material is ultimately removed together with the waste containers 32 for destruction (preferably burning).

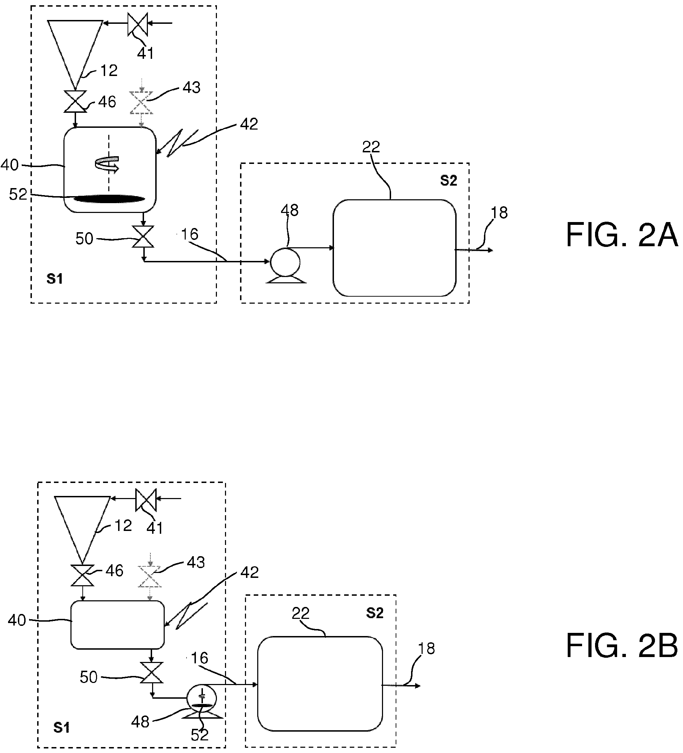

Reference is now made to Fig. 2A and Fig. 2B, which schematically illustrate in greater detail two alternative embodiments of the first process stage S1. The difference between the alternatives essentially lies in where the fragmentation is performed.

In both embodiments, the first process stage S1 comprises a bacteria reduction container 40 which is heated as schematically indicated by reference numeral 42 for performing an initial bacteria reduction of the blackwater. In this embodiment heating is used, but as indicated above, other bacteria reduction means may also be used, as alternatives or in combination with heating. The heating may be performed by different means, such as by heating the walls of the container 40 by external means and/or by arranging one or more heating elements inside the container 40. Each bacteria reduction container 40 is here shown as located directly under the associated vacuum toilet 12 in order to receive the ejected blackwater directly therefrom via a vacuum valve 46 and under influence of vacuum or suction force generated by a vacuum pump.

In the illustrated embodiment, a limited amount of cleansing water, e.g. 0,5 liters, is passed via a valve 41 into the toilet 12 at each flushing. A vacuum valve 43 at an upper area of the bacteria reduction container 40 may be used for applying vacuum for flushing of the toilet. This vacuum may come either from a separate source of vacuum or from a central vacuum in the system. The vacuum valve 43 will handle air only, not blackwater. It may be protected from sucking drops or aerosols by use of a protective structure, such as a demister. The bacteria reduction by heating in the bacteria reduction container 40 may continue for a predetermined amount of time after flushing in order to ensure that a desired amount of bacteria in the blackwater is killed, preferably most or all bacteria. The bacteria-reduced blackwater is then transferred from the container 40 via an outlet valve 50 to the buffer tank 22 of the second process stage S2 via piping 16. In this embodiment, a vacuum pump 48 is arranged in the second process stage S2 for this transfer. Thus, there may be one single centralized vacuum pump 48 common to all or a plurality of the vacuum toilets 12 arranged downstream the system 10.

In all embodiments of the inventive method and system, the blackwater ejected from the vacuum toilets 12 is subjected to both a bacteria reduction and an initial fragmentation in the first process stage S1 for producing an initially treated blackwater slurry. As stated above, one advantage obtained by the initial fragmentation is the possibility of transferring the material with small-diameter piping. However, different options exist as to where the initial fragmentation is performed, and these options may be combined. The initial fragmentation may be performed essentially at the same time as the bacteria reduction (Fig. 2A) or before or after the bacteria reduction (Fig. 2B). The initial fragmentation may be performed at least partly in a pump (Fig. 2B). Smaller-diameter piping 16 may advantageously be used for transferring the blackwater slurry to the buffer tank 22.

Fig. 2A schematically illustrates a preferred embodiment in which at least one fragmentation unit 52 is arranged inside each bacteria reduction container 40, here schematically illustrated as a rotating device 52. Performing the fragmentation already in the bacteria reduction container 40 has the advantage that small-diameter piping can be used in a major part of the system, and that the overall process time may be shortened. The fragmentation of the blackwater may shorten the bacteria reduction time as a result of the stirring action of the fragmentation, and a separate process stage for the fragmentation may be avoided. As a result, it will probably be easier to obtain a considerable or even a total reduction of the number of living bacteria in the blackwater if fragmentized during the heating treatment. In the example in Fig. 2A, the sequence is: vacuum toilet → vacuum ejection of blackwater → bacteria reduction + fragmentation → suction of blackwater slurry → buffer tank.

Fig. 2B illustrates an alternative embodiment in which a pump 48 is arranged in each first process stage S1 and where the fragmentation occurs at least partly in the pump 48, as schematically illustrated at reference numeral 52. This embodiment is an example where a positive pump pressure is used for the transport. In this embodiment, the process sequence is: vacuum toilet → vacuum ejection of blackwater → bacteria reduction → fragmentation during pumping → pumping of blackwater slurry to buffer tank by pressure. Instead of using the pump 48 for the fragmentation it is also possible to use a dedicated fragmentation unit in the first process stage S1 downstream of the bacteria reduction container 40.

In the embodiments illustrated in Fig. 2A and Fig. 2B, the bacteria reduction is performed in a bacteria reduction container 40. The blackwater will remain in the containers 40 for a certain time for completing the bacteria reduction. Thereafter, it is transferred to the buffer tank 22 via piping 16. It may also be possible to design a system 10 in which the bacteria reduction is performed directly after the ejection from the vacuum toilet but without using a separate bacteria reduction container. Instead, one may arrange an in-line heated piping system in which the bacteria reduction is performed while the blackwater is flowing continuously through the piping during ejection/flushing. The piping may have a suitable spiral shape or the like for obtaining the heat exchange within a restricted space.

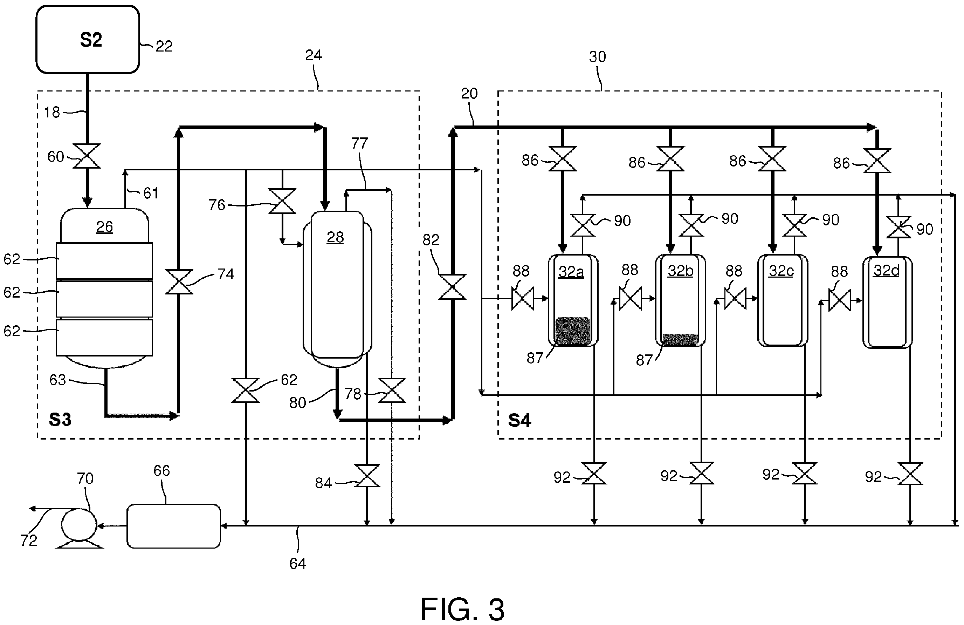

Reference is now made to Fig. 3, schematically showing in greater detail an example of the third process stage S3 and the fourth process stage S4 of the system 10 in Fig. 1. The vaporization unit 24 and the waste handling unit 30 are marked with boxes in dashed lines. The waste transferring piping is marked with thicker lines, whereas piping for hot water vapor and condensed water is marked with thinner lines.

The three process stages S2, S3 and S4 may typically be located relatively adjacent to each other and separately or distantly from the first process stage S1. In this non-limiting embodiment, the vaporization unit 24 of the third process stage S3 comprises a first vaporization chamber 26 and a second vaporization chamber 28. The second chamber 28 may be followed by further vaporization chambers (not shown) operating in sequence.

The second chamber 28 may also work in parallel with a plurality of similar additional second vaporization chambers. The design of the vaporization unit 24, such as the number and size of the vaporization chambers, will be optimized with respect to the required vaporization capacity balanced against system costs. Sensors (not shown) are arranged for determining the temperature, the pressure and the fill level of the vaporization chambers of the vaporization unit 24.

The first vaporization chamber 26 is connected to the buffer tank 22 via the piping 18 and a control valve 60 for receiving blackwater slurry from the buffer tank 22. In preferred embodiments this may be performed in batches.

Preferably, new blackwater slurry is introduced into an ongoing vaporization process in the first vaporization chamber 26 only a few times per day, since addition of blackwater may temporarily halt the vaporization process. The first vaporization chamber 26 is provided with one or more mantle heaters 62 for heating the blackwater slurry in the first vaporization chamber 26 to a temperature causing water of the blackwater slurry to evaporate. The generated hot water vapor is removed from the upper part of the first chamber 26 at piping 61.

Part of the vapor may be transferred, by a pump 70, via a valve 62, a main pipe 64 and a condenser 66 to an ambient system at 72, such as a public sewage system. In the illustrated example, the mantle heater 62 may comprise a plurality of heating elements which may be separately activated depending on the material level in the chamber 26. Water-reduced blackwater slurry produced by the vaporization is removed from the first vaporization chamber 26 at the bottom part thereof at piping 63 and is transferred via a control valve 74 to the second vaporization chamber 28 at the top thereof.

In the illustrated embodiment, the second vaporization chamber 28 is a double-walled container and may have a smaller volume than the first vaporization chamber 26, as an example a third of the volume of the first vaporization chamber 26. The double-walled structure is used for heating the second vaporization chamber 28 by vapor. In the illustrated example, the vapor generated by the first vaporization chamber 26 is transferred via the piping 61 and a control valve 76 into the double-walled structure of the second vaporization chamber 28. Excess vapor from the first vaporization chamber 26 may, via the control valve 62, be transferred to the main pipe 64. Protective structures, such as one or more demisters, may be arranged where the water vapor is evacuated at 61.

In some embodiments, the heat content of the vapor from the first vaporization chamber 26 may be so high that the evaporation in the second vaporization chamber 28 may be performed in half the time needed in the first vaporization chamber 26. As will be described below, the hot vapor generated by the first vaporization chamber 26 may also be used for heating the waste handling unit 30. Vapor from the second vaporization chamber 28 is transferred via piping 77 and a valve 78 to the main pipe 64. Protective structures such as one or more demisters, may be arranged where the water vapor is evacuated at 77.

The water-reduced waste material is removed from the lower part of the second vaporization chamber at reference numeral 80 and is transported via a control valve 82 to the waste handling unit 30.

Heating the second vaporization chamber 28 by hot vapor entering the double-walled structure is advantageous in terms of heat transfer. The heat transfer to the contents inside the chamber 28 will be more efficient since the condensation of the hot vapor will mainly occur in the zone where the vaporization takes place. Thereby, the vaporization operation in the second vaporization chamber 28 may be performed with little loss of efficiency as the level drops. Condensed water may exit the double-walled structure at the lower part thereof and be transferred to the main pipe 64 via a valve 84.

The water-reduced blackwater slurry, now referred to as water-reduced waste material, is transferred from the vaporization unit 24 via the valve 82 to the waste handling unit 30. In this embodiment, the waste handling unit 30 comprises four waste containers 32a to 32d. Fig. 3 schematically illustrates how the fill level 87 may differ in the waste containers 32. The water-reduced waste material from the vaporization unit 24 is introduced into the waste containers 32a to 32b via associated control valves 86. In the waste handling unit 30, the waste material is subjected to water reduction by evaporation in the waste containers 32.

In the illustrated example, the waste containers are heated by hot vapor evacuated from the first vaporization chamber 26 and transferred to the respective waste containers 32 via associated valves 88 and into a double-walled cylinder, which may be part of the waste container or a separate heater. In the replaceable waste containers, the waste material is subjected to a final water reduction and the vapor is evacuated at the top and transferred to the main pipe 64 and the condenser 66 via associated valves 90. Vapor and condensed water from the heated double-walled cylinder is evacuated at the lower part and transferred via associated valves 92 to the main pipe 64.

The system as shown in the figures may operate as described below. Computer means and electronics (not shown) will be used to control the whole process on the basis of signals received from various temperature, pressure and level sensors and also on the basis of control signals being sent to the various valves. In addition, one or more vacuum pumps are used for transporting the blackwater, the blackwater slurry and waste material as well as for reducing the pressure in the vaporization chambers and/or the waste containers to facilitate formation of water vapor through vaporization.

### Example

As an illustrative example, the vaporization unit may be designed and be operated as follows:

| | |
|---|---|
| Treated blackwater volume | 300-500 liters/day |
| Total amount of final waste material | 30-60 kg/day |
| Total volume | 160 liters |
| Maximum fill volume | 100 liters |
| Height | 1 m |
| Diameter | 450 mm |
| Heating effect | 8,4 kW |
| Operating temperature | 95°C |
| Operating pressure | 0,7 - 0,85 bar |
| Total volume | 50 liters |
| Maximum fill volume | 33 liters |
| Height | 1 m |
| Diameter | 250 mm |
| Operating temperature | 80°C |
| Operating pressure | 0,5 bar |

**Waste handling unit 30**

| | |
|---|---|
| Total volume | 4 * 50 liters |

**Double-walled cylinder for heating by hot vapor**

| | |
|---|---|
| Operating temperature | 95°C |
| Operating pressure | 0,7 - 0,85 bar |
| Replacement interval of waste containers about once per 3-6 days | |

As described above, each bacteria-reduction container 40 is provided with two suction outlets (Fig 2A to 2B):
- The top suction outlet at flushing valve 43 for applying flushing vacuum for drawing the blackwater from the toilet 12 into the container 40.
- The bottom suction outlet at the bottom valve 50 for transporting the blackwater slurry out from the container 40 after the blackwater has been processed in the container 40 for a suitable time period and at a suitable temperature.

The container 40 is preferably provided with a pressure sensor (not shown) for determining the pressure inside the container 40. The opening degree of the flushing valve 43 is pressure controlled. Normally, the flushing valve 43 is open to a small degree such that the pressure is close to atmospheric pressure, but preferably a bit lower, e.g. at 0,9 atm. A slight subatmospheric pressure may prevent leakage of unpleasant odors.

When the toilet 12 is to be flushed by the user pressing a button or the like, the cleansing water valve 41 is opened and the flushing top valve 43 is more opened in order to create a substantial suction effect on the blackwater being drawn into the container 40. However, this will occur only provided there is enough available space in the container 40. Thus, the container 40 may also be provided with a level sensor (not shown). During flushing, the bottom outlet valve 50 is closed. Optionally, the top outlet of the container 40 may be provided with a protective structure such as a demister (not shown) in order to prevent drops, containing untreated material, caused by splashing from exiting through the valve 43 into the system. When heating is used for performing the bacteria reduction, the system may be designed such that bacteria reduction by heating and the fragmentation is initiated in response to the flushing, for instance a short period (e.g. 5 seconds) after flushing has been initiated. The heating may be controlled by a temperature sensor (not shown). When the temperature of the material has reached a predetermined temperature, for example 90 degrees, the temperature is maintained at this level for a predetermined time period, for example 30 seconds, to complete the bacteria reduction.

The heating process may be performed in many ways. As an example, the container 40 may be pre-heated to e.g. 60 degrees and then heated to a higher temperature only when needed. As an alternative, the heating could be applied only at flushing, but that would probably somewhat delay the process. In order to shorten the processing time, it is possible to use heated water for the cleansing water at valve 41. If the temperature of the hot water in the hospital piping is insufficient, such heated cleansing water may optionally be generated by producing hot water at or near the toilet 12.

When the heating and the fragmentation has been carried out during a desired time period, the top valve 43 is closed (if not closed earlier) and the bottom outlet valve 50 is opened such that the initially treated blackwater slurry is ejected from the container 40 by the pump 48 and transferred to the buffer tank 22. The suction for emptying the container 40 may also be generated by one or more central pumps downstream the system, as an alternative to or in addition to the pump 48. Optionally, the container 40 may be provided with air inlet means such that air can enter into the container 40 while the slurry is pumped out. When the bottom valve 50has been open for a predetermined time and/or possibly under control by the level sensor, the bottom valve 50 is closed again, e.g. after 15 seconds. As an alternative, the container 40 is not emptied until after more than one flushing.

In the case where the toilet 12 has been flushed multiple times during a short time period, it may occur that the container 40 becomes full. In such situations, the control electronics may be designed such that flushing of the toilet 12 is deferred until the processing in the container has been completed.

As an example, the time periods for the different sequences in process stage S1 may be as follows: Blackwater ejected from the toilet 12 into the container 40 during about 15 seconds. About 30 seconds for reaching the target temperature in the container 40. Fragmentation may start directly at flushing or very shortly thereafter. Bacteria-reduction by heating during about 30 seconds. Emptying through bottom valve 45 during about 15 seconds. Thus, a total of about 1,5 minutes for one complete flushing and initial processing sequence. It may here be mentioned that if may be advantageous (but not necessary) to activate the fragmentation during the heating, since a stirring of the material will facilitate that the correct temperature is reached in all of the material in the container 40.

The blackwater slurry may be temporarily stored in the buffer tank 22 and may be transferred in batches to the first vaporization chamber 26 at spaced times. Such transfer may typically be initiated in response to that the vaporization process in the first vaporization chamber 26 has been performed to a desired degree, and when at least part of the remaining contents in the first vaporization chamber 26 has been transferred to the second vaporization chamber 28.

The tendency to form deposits on the walls of the second vaporization chamber 28 differs between different water solutions, and has to be determined in preliminary examinations for all water solutions that are fed into the system 10. The vaporization process in the second vaporization chamber 28 may be stopped at an optimum time, when the remaining water content is still high enough to secure that there is a sufficient fluidity and that there is only a small tendency for formation of deposits on the walls of the second vaporization chamber 28, but the water content being as small as possible. At the optimum time, the remaining concentrated material, now referred to as "waste material" is transferred from the second vaporization chamber 28 via the valve 82 to the waste handling unit 30. In the illustrated embodiment, the water content is reduced further in the waste handling unit 30. Pumps may be used for reducing the pressure in the vaporization chambers 26, 28 and/or the waste containers 32, making it possible for the contents to boil at temperatures below 100°C by creating below-atmospheric pressure.

In the first vaporization chamber 26, the initial blackwater slurry volume of 100 liters may be reduced to 2/3 by vaporization of water being removed as vapor. Of the 66 liters of water-reduced blackwater slurry remaining in the first vaporization chamber 26, 33 liters are pumped via 63, 74 to the second vaporization chamber 28.

Thereafter, additional blackwater slurry is pumped to the first vaporization chamber 26 from the buffer tank 22, such that the first chamber 26 all the time during vaporization presents a fill volume which varies between the maximum fill volume (100 liters) and 2/3 of the maximum fill volume. In this example, the final amount of waste material in the waste containers could be in the range of 30 - 60 kg per day. It should be noted that the numbers here are only given by example and could vary substantially.

Preferably, the degree or speed of vaporization in the first vaporization chamber 26 is higher for higher fill volumes. When full, all heating elements 62 may be active, whereas only one or two heating elements 62 may be active when the chamber is less full.

In the vaporization unit 24, the water content of the initially treated blackwater slurry may be reduced by 30% to 95%, preferably 50% to 95%, and most preferably 70% to 95%, Thereby, the water reduced waste material produced in the vaporization unit 24 may contain a remaining water content of 70% to 5%, preferably 50% to 5%, and most preferably 30% to 5%, of the initial water content. This remaining water content in the waste material will be sufficient to avoid major deposits in the vaporization chambers 26, 28. No or only minor deposits will occur.

The water content of the waste material from the vaporization unit 24 may in this embodiment be further reduced in the waste handling containers 32 such that the water content in the final waste material contained in said waste containers 32 is further reduced by 10% to 100%, preferably 30% to 100%, and most preferably by 50% to 100%.

The combined water-reduction in the vaporization unit 24 and the waste handling unit 30 may be such that the final water content in the final waste material is 10% to 0% of the initial blackwater, preferably 5% to 0%, and most preferred 0%, i.e. a completely or essentially completely dry final waste material. This final reduction of water in the waste containers 32 results in a very substantial reduction of produced waste material from the system 10. Even if such final vaporization in the waste handling unit 30 results in an almost dry or completely dry final waste material in the waste containers 32, this will cause no problems with deposits since the waste containers 32 will be removed when filled and replaced by new empty containers.

Condensed water from the pump 70 at reference numeral 72 being substantially free from any potentially harmful medical substances may be discharged directly into the waste water system, e.g. a public sewage system.

Reference is now made to Fig. 4A to 4C illustrating three alternative schemes for operating the waste handling unit 30. In all the alternatives, the waste containers are filled in sequence. In Fig. 4A, waste container #1 is first filled via its control valve 86. When #1 is full, the drying is initiated in #1 by activating the associated vapor valve 88 and the filling is thereafter made in container #2. When container #1 is dry and perhaps 75% of the contents has been removed as vapor, it may be filled again in a second fill cycle. Thus, for each waste container 32, the sequence of operation may be: filling → drying → new filling → drying, etc. until the container is filled to a desired level, after which it is replaced. In Fig. 4A, the filling and drying cycles are equal. In Fig. 4B and Fig. 4C, a drying cycle is twice as long or three times as long, respectively, as a filling cycle. When all cycles have been completed, the waste containers 32 with the final water-reduced waste material therein are removed for destruction and replaced with new containers. Other types of filling cycles are also possible.

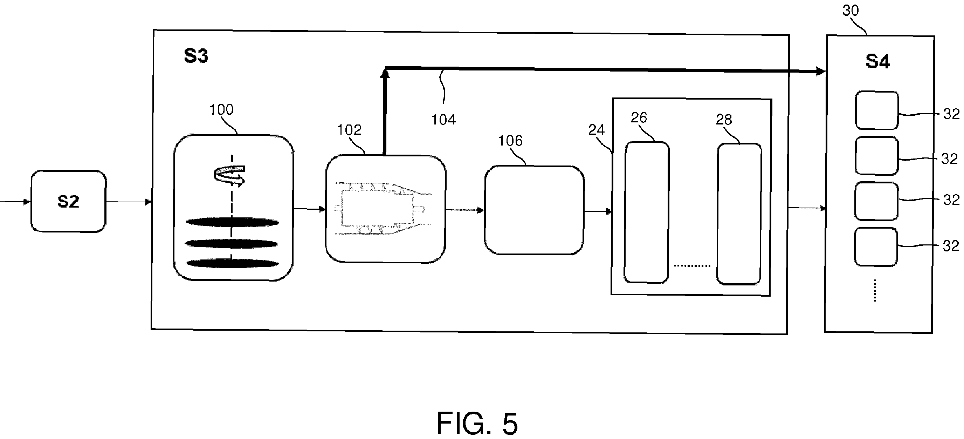

Reference is now made to Fig. 5, which schematically illustrates optional further equipments in the third process stage S3. These equipments may be used individually or in combination, and also in other mutual orders than the order shown in Fig. 5

As a first optional equipment, a central fragmentation unit 100 may be arranged to further fragmentize the blackwater slurry before it enters the central vaporization unit 24. In this unit 100, the already fragmentized solids in the slurry, especially fragmentized toilet paper, may be further fragmentized into even smaller fragments or pieces, thereby reducing the risk of cellulose deposits on the inner walls of the vaporization chambers 26, 28. A buffer tank may be arranged between the central fragmentation unit 100 and the vaporization unit 24.

As a second optional equipment, a solid-matter removal unit 102 may be arranged to remove solids from the blackwater slurry before the slurry enters the vaporization unit 24, for instance a decanter centrifuge arranged before the vaporization unit 24. The solids removed, such as cellulose fragments (small toilet paper pieces) and feces particles may be transferred at 104 to the waste handling unit 30 in order to be handled together with the waste material received from the vaporization unit. Further water can be removed by vaporization. A buffer tank may be arranged between the solid-matter removal unit 102 and the vaporization unit 24.

As a third optional equipment, a chemical treatment unit 106 may be arranged to break down cellulose (toilet paper fragments) in the blackwater slurry. The blackwater slurry may be subjected to the cellulose breakdown treatment during a suitable time period before being transferred further. Thereby, one may prevent or at least substantially reduce deposits of cellulose fragments (small pieces of toilet paper) on the inner walls of the vaporization chamber(s). Such a chemical treatment unit 106 may advantageously be combined with the central fragmentation unit 100. The chemical treatment may as an example include the use of cellulase or strong acids such as hydrochloric acid. A buffer tank may be arranged between the chemical treatment unit 106 and the vaporization unit 24.

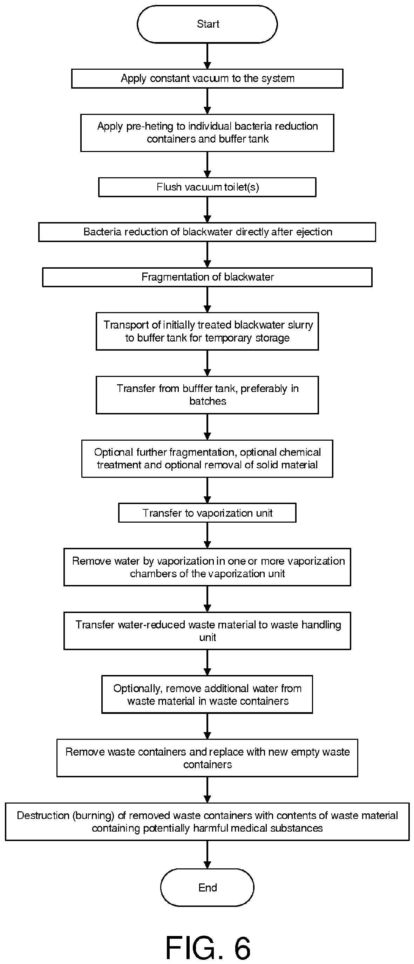

Fig. 6 illustrates various steps of an embodiment of a method according to the inventive concept.

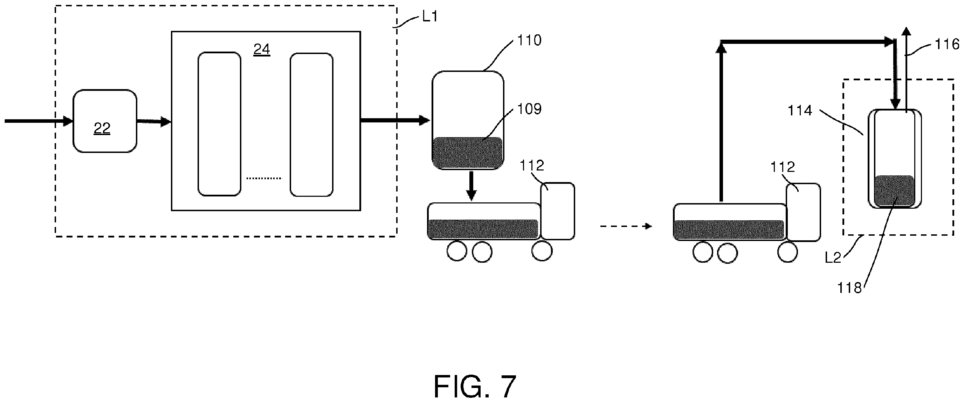

Fig. 7 schematically illustrates an alternative handling of the waste material from the evaporation unit 24. In this alternative embodiment, an apparatus according to the inventive concept, comprising the buffer tank 22 and the evaporation unit 24, is located at a first location L1. The water-reduced waste material 109 from the vaporization unit 24 is transferred to a tank 110. The waste material is thereafter transported by trucks 112 to another location L2. In the illustrated embodiment, one or more waste containers 114 corresponding to the waste containers 32 in Fig. 3 are arranged to receive the waste material from the trucks 112, optionally after storage in one or more buffer tanks. At the second location, a further water-reduction of the waste material by heating and/or low pressure may then be performed for producing a further water-reduced waste material 118. As in the previous example, the generated water vapor may be removed from the container 114 at 116 and optionally be transferred to a waste water system or to the environment. Thereafter, as described with reference to Fig. 3, the waste container 114 and the further water-reduced material therein may be destructed. It is also possible to perform the additional water reduction at L2 and then transfer the finally water-reduced waste material to further containers for destruction, optionally at a third location.

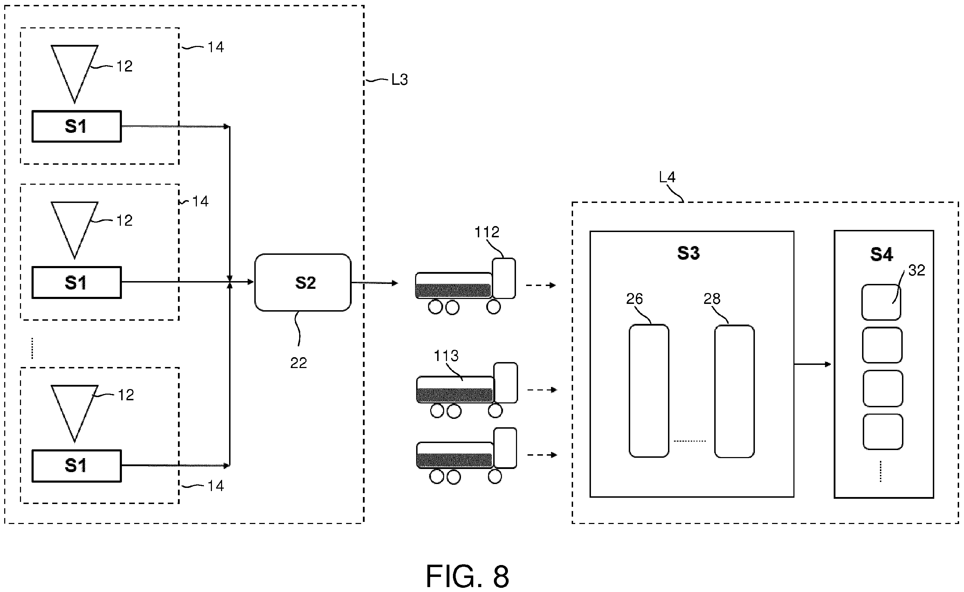

Fig. 8 schematically illustrates a further alternative embodiment, in which the first process stage S1 and the second process stage S2 are arranged at a first location L3, such as a hospital, and in which the third process stage S3 and the fourth process stage S4 are arranged at a different second location L4, such as a plant for receiving and processing aqueous compositions from one or more first locations L3. Blackwater from a number of toilets 12 is processed in the first process stage S1. Thereafter, the blackwater slurry is transferred to one or more buffer tanks 22 for temporary storage at the first location L3. The blackwater slurry is thereafter transferred from the buffer tank 22 to trucks 112, 113 and transported to the second location L4. Here, the blackwater slurry is processed by the vaporisators in the third process stage S3 optionally after storage in one or more buffer tanks.. The waste material from S3 is received in and optionally processed in the fourth process stage S4 as described above. Alternatively, the S4 stage may be performed at another location than L4. Thereafter, as described with reference to Fig. 3, the waste material may be destructed.

### Alternative embodiments

The embodiment described above and as shown in the figures may be varied in many ways without departing from scope of the claims.

With respect to the heating, there may be many other ways to heat the contents in both the vaporization chambers 26, 28 and the waste containers 32, including using heating elements which may at least partly be immersed in the liquid or placed around the chambers, microwaves, induction, etc. The double wall cylinder used for heating a waste container 32 may be separate from the waste container 32 such that only the waste container and not the double-walled cylinder is replaced. As an alternative, the double-walled cylinder for heating may be integrally formed with the waste container and thus being part of the waste container being replaced. In the embodiment shown, the hot vapor from the first vaporization chamber 26 is used for heating subsequent steps. However, separate heating solutions for the subsequent steps are also possible.

In alternative embodiments, the arrangement and number of pumps may differ from the illustrated example. For instance, there may be a vacuum pump arranged at each buffer tank, preferably downstream of the buffer tank. This suction may be used for ejecting the blackwater from the toilets. It is also possible to use a central suction from one or more central pumps downstream of the central vaporization unit for transporting the material through the system.

In order to make sure that the water vapor from the vaporization unit and/or from the waste handling unit is sufficiently clean, the system may further comprise an analytical unit (not shown) to evaluate the vapor purity. The evaluation may be done for instance either by measuring conductivity of condensed vapor or by determining its absorbance. The calculated data may be registered, stored and/or presented to a system operator via a control panel. The system may have online monitoring of the quality of the process. A continuous quality control may ensure that the condensed vapor from vaporization is sufficiently pure to be released in the public sewage system.

The number and arrangements of vaporization chambers may differ from the illustrated embodiment. In alternative embodiment, there may be only one single vaporization chamber or two or more chambers operating in parallel. For instance, there may be a plurality of first vaporization chambers 26 operating in parallel. In a system for a larger hospital, there may for instance be 5 to 10 first and second vaporization chambers operating in parallel.

In other embodiments, the arrangement for using the generated vapor for heating may differ. As an example, the hot vapor generated in the waste containers 32 may be transferred via valves to the wall of the second chamber 28 in order to save energy.

In the example above, the vapor generated in the process stages S3 and S4 is condensed and released to a public sewage system. In alternative embodiments, the condensed water may be released into a water tank or even a ditch or a stream. Alternatively, the vapor can be let out for instance into the ambient air without first being condensed into water.

In the reusable vaporization chambers 26, 28 of the vaporization unit 24 it may be advantageous to make sure that no liquid droplets, containing the potentially environmentally hazardous substances, will pass on to the next stages. This may be achieved by arranging one or more protective structures which are permeable to water vapor but which will capture any liquid droplets, as described in the co-pending PCT application No. PCT/EP2016/075957. The system may further comprise at least one heater adapted to heat such protective structures for preventing vapor from condensing at the protective structures. The protective structure may operate as a demister. The heating of at least one protective structure and/or at least one demister may be achieved by arranging a heating element on the protective structure or the demister to heat it by being thermally connected therewith. The heating could also be achieved by arranging a heating element or heater externally of the protective structure and/or the demister to heat either the protective structure or the demister or both entities, e.g. electrically. The heating is possible to achieve by electrical means and/or heat exchanging. Another possibility is to simply use the heat from the vapor itself and apply careful isolation of the demister.

## Claims

1. A method for handling blackwater containing medical substances, such as antibiotics, said method comprising, in a vacuum toilet system (10) in which blackwater ejected by vacuum from a plurality of vacuum toilets (12) contains medical substances present in dissolved state in bodily waste:
subjecting the ejected blackwater to an initial treatment including a bacteria reduction (40) and a fragmentation (52), for producing an initially treated blackwater slurry;
transferring (16) the blackwater slurry to at least one central buffer tank (22) and temporarily storing the blackwater slurry in said at least one central buffer tank (22);
transferring (18) the blackwater slurry from said at least one buffer tank (22) to a central vaporization unit (24) comprising one or more vaporization chambers (26, 28);
in said one or more vaporization chambers (26, 28), vaporizing water from the blackwater slurry for producing a water-reduced waste material containing said medical substances;
transferring (20) the water-reduced waste material into one or more replaceable waste containers (32);
in said one or more replaceable waste containers (32), vaporizing additional water from the water-reduced waste material for producing a further water-reduced waste material in the waste containers (32); and
removing and replacing said waste containers (32) containing said further water-reduced waste material.

2. A method as claimed in claim 1, wherein said blackwater is ejected from the vacuum toilets (12) into associated bacteria reduction containers (40) and wherein said bacteria reduction is performed in said bacteria reduction containers (40).

3. A method according to claim 2, wherein there is provided one bacteria reduction container (40) for each vacuum toilet (12) and wherein each bacteria reduction container (40) is located adjacent or is integrated with its associated vacuum toilet (12) such that the blackwater is ejected from the toilet (12) essentially directly into the bacteria reduction container (40).

4. A method as claimed in claim 2 or 3, wherein said fragmentation is performed at least partly in said bacteria reduction containers (40).

5. A method according to any of the preceding claims, wherein said bacteria reduction comprises bacteria reduction by heating.

6. A method as claimed in any of the proceeding claims, wherein said transferring (18) the blackwater slurry to the central vaporization unit (24) is performed in batches at spaced times.

7. The method as claimed in any of the preceding claims, further comprising subjecting said removed waste containers (32) together with the waste material contained therein to a destructive treatment, such as a high-temperature incineration process.

8. The method as claimed in any of the preceding claims, further comprising releasing (72) water vapor and/or condensed water obtained from the blackwater slurry into a waste water system, such as a public sewage system.

9. The method as claimed in any of the preceding claims, wherein, the water content of the blackwater slurry is reduced in the vaporization unit (24) by 30-95%, preferably 50-95% and most preferably by 70-95%.

10. The method as claimed in claim 1, wherein the water content of the waste material is further reduced in said one or more replaceable waste containers (32) by 10-100%, preferably 30-100%, and most preferably 50-100%.

11. A method as claimed in any of the preceding claims, wherein said water-reduced waste material is transferred (20) from the vaporization unit (24) into a plurality of replaceable waste containers (32) in sequence such that while one or more waste containers (32) are being filled water is being vaporized from waste material present in one or more previously filled waste containers (32).

12. A method as claimed in any of the preceding claims, further comprising subjecting the initially treated blackwater slurry to a further fragmentation upstream of the vaporization unit (24).

13. A method as claimed in any of the preceding claims, further comprising removing solids (102) from the blackwater slurry upstream of the vaporization unit (24).

14. A method as claimed in any of the preceding claims, further comprising subjecting the blackwater slurry, upstream of the vaporization unit (24), to a chemical treatment (106) for breaking down cellulose in the blackwater slurry.

15. A system (10) for handling blackwater containing medical substances, such as antibiotics, said system (10) comprising:
a plurality of vacuum toilets (12) from which blackwater is ejected by vacuum, said blackwater containing medical substances present in dissolved state in bodily waste;
bacteria reduction means (40, 42) for subjecting the ejected blackwater to a bacteria reduction;
fragmentation means (52) for fragmentizing the blackwater,
wherein the blackwater subjected to said bacteria reduction and said fragmentation forms a blackwater slurry;
at least one central buffer tank (22) which is arranged downstream of the bacteria reduction means (4) arranged to receive and temporarily store said blackwater slurry;
a central vaporization unit (24) which is arranged to receive said blackwater slurry from said at least one central buffer tank (22), said vaporization unit (24) comprising one or more vaporization chambers (26, 28) arranged to vaporize water from the blackwater slurry for producing a water-reduced waste material;
a waste handling unit (30) which comprises one or more replaceable waste containers (32) arranged to receive (20) the water-reduced waste material from the vaporization unit (24)
wherein the waste handling unit (30) is arranged to vaporize water from waste material in the waste containers (32) for producing a further water-reduced final waste material in said replaceable waste containers (32).

16. The system as claimed in claim 16, wherein said bacteria reduction means comprises a heated (42) bacteria reduction container (40) for each vacuum toilet (12), each bacteria reduction container (40) being located adjacent the associated vacuum toilet (12) such that the blackwater is ejected essentially directly into the bacteria reduction container (40).

17. The system as claimed in claim 17, wherein said fragmentation means (52) is arranged to fragmentize the blackwater at least while being present in the bacteria reduction containers (40).

18. The system as claimed in any of claims 16-18, wherein the system is connected to a waste water system, such as a public sewage system, for releasing water vapor and/or condensed water obtained from the blackwater slurry into said waste water system.

19. The system as claimed in any of claims 16-20, further comprising central fragmentation means (100) arranged upstream of the vaporization unit (24) for further fragmentizing the blackwater slurry before the blackwater slurry is received by the central vaporization unit (24).

20. The system as claimed in any of claims 16-21, further comprising central solid-matter removal means (102), such as a decanter centrifuge, arranged upstream of the vaporization unit (24) and arranged to remove solids from the blackwater slurry before the blackwater slurry is received by the central vaporization unit (24).

21. The system as claimed in any of claims 16-22, further comprising central chemical treatment means (106) arranged upstream of the vaporization unit (24) and arranged to break down cellulose in the blackwater slurry before the blackwater slurry is received by the central vaporization unit (24).

## Patentansprüche

1. Verfahren zur Behandlung von Schwarzwasser, das medizinische Stoffe enthält, beispielsweise Antibiotika, wobei das Verfahren umfasst, in einem Vakuumtoilettensystem (10), in dem durch ein Vakuum von einer Vielzahl von Vakuumtoiletten (12) ausgegebenes Schwarzwasser medizinische Stoffe enthält, die in einem gelösten Zustand in körperlichem Abfall enthalten sind:
das ausgegebene Schwarzwasser einer Erstaufbereitung, einschließlich einer Bakterienreduktion (40) und einer Fragmentierung (52), zu unterziehen, um einen erstaufbereiteten Schwarzwasserschlamm zu produzieren;
den Schwarzwasserschlamm in mindestens einen zentralen Pufferbehälter (22) zu übertragen (16) und den Schwarzwasserschlamm zeitweilig in dem mindestens einen zentralen Pufferbehälter (22) zu lagern;
den Schwarzwasserschlamm aus dem mindestens einen Pufferbehälter (22) in eine zentrale Verdampfungseinheit (24) zu übertragen (18), die eine oder mehrere Verdampfungskammern (26, 28) umfasst;
in der einen oder mehreren Verdampfungskammern (26, 28) Wasser aus dem Schwarzwasserschlamm zu verdampfen, um ein wasserreduziertes Abfallmaterial zu produzieren, das die medizinischen Stoffe enthält;
das wasserreduzierte Abfallmaterial in einen oder mehrere ersetzbare Abfallbehälter (32) zu übertragen (20);
in dem einen oder mehreren ersetzbaren Abfallbehältern (32) zusätzliches Wasser aus dem wasserreduzierten Abfallmaterial zu verdampfen, um ein weiter wasserreduziertes Abfallmaterial in den Abfallbehältern (32) zu produzieren; und
die Abfallbehälter (32), die das weiter wasserreduzierte Abfallmaterial enthalten, zu entfernen und zu ersetzen.

2. Verfahren nach Anspruch 1, wobei das Schwarzwasser aus den Vakuumtoiletten (12) in zugeordnete Bakterienreduktionsbehälter (40) abgegeben wird, und wobei die Bakterienreduktion in den Bakterienreduktionsbehältern (40) ausgeführt wird.

3. Verfahren nach Anspruch 2, wobei ein Bakterienreduktionsbehälter (40) für jede Vakuumtoilette (12) vorgesehen ist, und wobei jeder Bakterienreduktionsbehälter (40) seiner zugeordneten Vakuumtoilette (12) benachbart oder in sie integriert ist, sodass das Schwarzwasser von der Toilette (12) im Wesentlichen direkt in den Bakterienreduktionsbehälter (40) abgegeben wird.

4. Verfahren nach Anspruch 2 oder 3, wobei die Fragmentierung mindestens teilweise in den Bakterienreduktionsbehältern (40) ausgeführt wird.

5. Verfahren nach einem der vorangehenden Ansprüche, wobei die Bakterienreduktion eine Bakterienreduktion durch Erwärmen umfasst.

6. Verfahren nach einem der vorangehenden Ansprüche, wobei das Übertragen (18) des Schwarzwasserschlamms in die zentrale Verdampfungseinheit (24) in Chargen zu beabstandeten Zeiten ausgeführt wird.

7. Verfahren nach einem der vorangehenden Ansprüche, ferner umfassend ein Aussetzen der entfernten Abfallbehälter (32) zusammen mit dem darin enthaltenen Abfallmaterial einer destruktiven Behandlung, beispielsweise einem Hochtemperaturverbrennungsprozess.

8. Verfahren nach einem der vorangehenden Ansprüche, ferner umfassend ein Abgeben (72) von Wasserdampf und/oder kondensiertem Wasser, das aus dem Schwarzwasserschlamm erhalten wurde, in ein Abwassersystem, beispielsweise ein öffentliches Abwassersystem.

9. Verfahren nach einem der vorangehenden Ansprüche, wobei der Wassergehalt des Schwarzwasserschlamms in der Verdampfungseinheit (24) um 30-95 %, vorzugsweise um 50-95 % und am stärksten bevorzugt um 70-95 % reduziert wird.

10. Verfahren nach Anspruch 1, wobei der Wassergehalt des Abfallmaterials in dem einen oder mehreren ersetzbaren Wasserbehältern (32) um 10-100 %, vorzugsweise um 30-100 % und am stärksten bevorzugt um 50-100 % weiter reduziert wird.

11. Verfahren nach einem der vorangehenden Ansprüche, wobei das wasserreduzierte Abfallmaterial von der Verdampfungseinheit (24) in eine Vielzahl von ersetzbaren Wasserbehältern (32) nacheinander übertragen wird (20), sodass, während ein oder mehrere Wasserbehälter (32) gefüllt werden, Wasser aus dem in einem oder mehreren vorher gefüllten Abfallbehältern (32) vorhandenen Abfallmaterial verdampft wird.

12. Verfahren nach einem der vorangehenden Ansprüche, ferner umfassend ein Aussetzen des erstaufbereiteten Abwasserschlamms einer weiteren Fragmentierung, der Verdampfungseinheit (24) vorgelagert.

13. Verfahren nach einem der vorangehenden Ansprüche, ferner umfassend ein Entfernen von Feststoffen (102) aus dem Schwarzwasserschlamm, der Verdampfungseinheit (24) vorgelagert.

14. Verfahren nach einem der vorangehenden Ansprüche, ferner umfassend ein Unterwerfen des Schwarzwasserschlamms, der Verdampfungseinheit (24) vorgelagert, einer chemischen Behandlung (106) zum Aufspalten von Zellulose in dem Schwarzwasserschlamm.

15. System (10) zur Behandlung von Schwarzwasser, das medizinische Stoffe enthält, beispielsweise Antibiotika, wobei das System (10) Folgendes umfasst:
eine Vielzahl von Vakuumtoiletten (12), aus denen Schwarzwasser durch Vakuum ausgegeben wird, wobei das Schwarzwasser medizinische Stoffe enthält, die in gelöstem Zustand in körperlichem Abfall vorhanden sind;
Bakterienreduktionsmittel (40, 42), um das ausgegebene Schwarzwasser einer Bakterienreduktion zu unterwerfen;
Fragmentierungsmittel (52) zum Fragmentieren des Schwarzwassers,
wobei das Schwarzwasser der Bakterienreduktion unterworfen wird und die Fragmentierung einen Schwarzwasserschlamm ausbildet;
mindestens einen zentralen Pufferbehälter (22), der dem Bakterienreduktionsmittel (4) nachgelagert angeordnet ist, angeordnet, um den Schwarzwasserschlamm aufzunehmen und zeitweilig zu speichern;
eine zentrale Verdampfungseinheit (24), die angeordnet ist, um den Schwarzwasserschlamm aus dem mindestens einen zentralen Pufferbehälter (22) aufzunehmen, wobei die Verdampfungseinheit (24) eine oder mehrere Verdampfungskammern (26, 28) umfasst, die angeordnet sind, um Wasser aus dem Schwarzwasserschlamm zu verdampfen, um ein wasserreduziertes Abfallmaterial zu produzieren;
eine Abfallverarbeitungseinheit (30), die einen oder mehrere ersetzbare Abfallbehälter (32) umfasst, die angeordnet sind, um das wasserreduzierte Abfallmaterial aus der Verdampfungseinheit (24) aufzunehmen (20),
wobei die Abfallverarbeitungseinheit (30) angeordnet ist, um Wasser aus Abfallmaterial in den Abfallbehältern (32) zu verdampfen, um ein weiteres wasserreduziertes finales Abfallmaterial in den ersetzbaren Abfallbehältern (32) zu produzieren.

16. System nach Anspruch 16, wobei das Bakterienreduktionsmittel einen erwärmten (42) Bakterienreduktionsbehälter (40) für jede Vakuumtoilette (12) umfasst, wobei sich jeder Bakterienreduktionsbehälter (40) benachbart zu der zugeordneten Vakuumtoilette (12) befindet, sodass das Schwarzwasser im Wesentlichen direkt in den Bakterienreduktionsbehälter (40) abgegeben wird.

17. System nach Anspruch 17, wobei das Fragmentierungsmittel (52) angeordnet ist, um das Schwarzwasser zu fragmentieren, mindestens, während es sich in den Bakterienreduktionsbehältern (40) befindet.

18. System nach einem der Ansprüche 16-18, wobei das System mit einem Abwassersystem, etwa einem öffentlichen Abwassersystem, verbunden ist, um Wasserdampf und/oder kondensiertes Wasser, das von dem Abwasserschlamm erhalten wurde, in das Abwassersystem abzugeben.

19. System nach einem der Ansprüche 16-20, ferner umfassend zentrale Fragmentierungsmittel (100), die der Verdampfungseinheit (24) vorgelagert angeordnet sind, um den Schwarzwasserschlamm weiter zu fragmentieren, bevor der Schwarzwasserschlamm von der zentralen Verdampfungseinheit (24) aufgenommen wird.

20. System nach einem der Ansprüche 16-21, ferner umfassend ein zentrales Feststoffentfernungsmittel (102), beispielsweise eine Dekantierzentrifuge, der Verdampfungseinheit (24) vorgelagert angeordnet und angeordnet, um Feststoffe aus dem Schwarzwasserschlamm zu entfernen, bevor der Schwarzwasserschlamm von der zentralen Verdampfungseinheit (24) aufgenommen wird.

21. System nach einem der Ansprüche 16-22, ferner umfassend ein zentrales chemisches Behandlungsmittel (106), der Verdampfungseinheit (24) vorgelagert angeordnet und angeordnet, um Zellulose in dem Schwarzwasserschlamm aufzuspalten, bevor der Schwarzwasserschlamm von der zentralen Verdampfungseinheit (24) aufgenommen wird.

## Revendications

1. Procédé pour traiter des eaux noires contenant des substances médicales, telles que des antibiotiques, ledit procédé comprenant, dans un système de toilettes à aspiration (10) dans lequel des eaux noires éjectées, par de l'aspiration, à partir d'une pluralité de toilettes à aspiration (12) contiennent des substances médicales présentes, dans un état dissout, dans des matières de vidange :
la soumission des eaux noires éjectées à un traitement initial incluant une réduction de bactéries (40) et une fragmentation (52), pour produire une boue initialement traitée d'eaux noires ;
le transfert (16) de la boue d'eaux noires à au moins un réservoir tampon central (22) et le stockage temporaire de la boue d'eaux noires dans ledit au moins un réservoir tampon central (22) ;
le transfert (18) de la boue d'eaux noires, à partir dudit au moins un réservoir tampon (22), à une unité centrale de vaporisation (24) comprenant une ou plusieurs chambres de vaporisation (26, 28) ;
dans lesdites une ou plusieurs chambres de vaporisation (26, 28), la vaporisation d'eau, à partir de la boue d'eaux noires, pour produire une matière de déchet à eau réduite contenant lesdites substances médicales ;
le transfert (20) des matière de déchet à eau réduite dans un ou plusieurs contenants de déchet remplaçables (32) ;
dans lesdits un ou plusieurs contenants de déchet remplaçables (32), la vaporisation d'eau supplémentaire à partir de la matière de déchet à eau réduite pour produire une matière de déchet supplémentaire à eau réduite dans les contenants de déchet (32) ; et
l'enlèvement et le remplacement desdits contenants de déchet (32) contenant ladite matière de déchet supplémentaire à eau réduite.

2. Procédé selon la revendication 1, dans lequel lesdites eaux noires sont éjectées, depuis les toilettes à aspiration (12), dans des contenants associés à réduction de bactéries (40) et dans lequel ladite réduction de bactéries est réalisée dans lesdits contenants à réduction de bactéries (40).

3. Procédé selon la revendication 2, dans lequel il est prévu un contenant à réduction de bactéries (40) pour chaque cabinet de toilettes à aspiration (12) et dans lequel chaque contenant à réduction de bactéries (40) est situé de façon adjacente à, ou est intégré avec, ses toilettes à aspiration associées (12) de telle sorte que les eaux noires soient éjectées à partir des toilettes (12) essentiellement directement dans le contenant à réduction de bactéries (40).

4. Procédé selon la revendication 2 ou 3, dans lequel ladite fragmentation est réalisée au moins partiellement dans lesdits contenants à réduction de bactéries (40).

5. Procédé selon l'une quelconque des revendications précédentes, dans lequel ladite réduction de bactéries comprend la réduction de bactéries par chauffage.

6. Procédé selon l'une quelconque des revendications précédentes, dans lequel ledit transfert (18) de la boue d'eaux noires à l'unité centrale de vaporisation (24) est réalisé en lots à des instants espacés.

7. Procédé selon l'une quelconque des revendications précédentes, comprenant en outre la soumission desdits contenants de déchet enlevés (32), conjointement avec la matière de déchet contenue dans ceux-ci, à un traitement de destruction, tel qu'un processus d'incinération à haute température.

8. Procédé selon l'une quelconque des revendications précédentes, comprenant en outre la libération (72) de vapeur d'eau et/ou d'eau condensée obtenue de la boue d'eaux noires dans un système d'eaux usées, tel qu'un système d'égout public.

9. Procédé selon l'une quelconque des revendications précédentes, dans lequel la teneur en eau de la boue d'eaux noires est réduite dans l'unité de vaporisation (24) de 30 à 95 %, de préférence de 50 à 95 % et mieux encore de 70 à 95 %.

10. Procédé selon la revendication 1, dans lequel la teneur en eau de la matière de déchet est réduite davantage dans lesdits un ou plusieurs contenants de déchet remplaçables (32) de 10 à 100 %, de préférence de 30 à 100 %, et mieux encore de 50 à 100 %.

11. Procédé selon l'une quelconque des revendications précédentes, dans lequel ladite matière de déchet à eau réduite est transférée (20), depuis l'unité de vaporisation (24), dans une pluralité de contenants de déchet remplaçables (32), en séquence, de telle sorte que, alors qu'un ou plusieurs contenants de déchet (32) sont en train d'être remplis, de l'eau soit en train d'être vaporisée à partir de matière de déchet présente dans un ou plusieurs contenants de déchet remplis auparavant (32) .

12. Procédé selon l'une quelconque des revendications précédentes, comprenant en outre la soumission de la boue initialement traitée d'eaux noires à une fragmentation supplémentaire en amont de l'unité de vaporisation (24).

13. Procédé selon l'une quelconque des revendications précédentes, comprenant en outre l'élimination de matières solides (102) à partir de la boue d'eaux noires en amont de l'unité de vaporisation (24).

14. Procédé selon l'une quelconque des revendications précédentes, comprenant en outre la soumission de la boue d'eaux noires, en amont de l'unité de vaporisation (24), à un traitement chimique (106) pour décomposer de la cellulose dans la boue d'eaux noires.

15. Système (10) pour traiter des eaux noires contenant des substances médicales, telles que des antibiotiques, ledit système (10) comprenant :
une pluralité de toilettes à aspiration (12) desquelles des eaux noires sont éjectées par aspiration, lesdites eaux noires contenant des substances médicales présentes, dans état dissout, dans des matières de vidange ;
des moyens de réduction de bactéries (40, 42) pour soumettre les eaux noires éjectées à une réduction de bactéries ;
des moyens de fragmentation (52) pour fragmenter les eaux noires,
dans lequel les eaux noires soumises à ladite réduction de bactéries et ladite fragmentation forment une boue d'eaux noires ;
au moins un réservoir tampon central (22), qui est agencé en aval des moyens de réduction de bactéries (4), agencé pour recevoir et stocker temporairement ladite boue d'eaux noires ;
une unité centrale de vaporisation (24) qui est agencée pour recevoir ladite boue d'eaux noires à partir dudit au moins un réservoir tampon central (22), ladite unité de vaporisation (24) comprenant une ou plusieurs chambres de vaporisation (26, 28) agencées pour vaporiser de l'eau à partir de la boue d'eaux noires pour produire une matière de déchet à eau réduite ;
une unité de traitement de déchet (30) qui comprend un ou plusieurs contenants de déchet remplaçables (32) agencés pour recevoir (20) la matière de déchet à eau réduite à partir de l'unité de vaporisation (24),
dans lequel l'unité de traitement de déchet (30) est agencée pour vaporiser de l'eau à partir de matière de déchet dans les contenants de déchet (32) pour produire une matière de déchet supplémentaire finale à eau réduite dans lesdits contenants de déchet remplaçables (32).

16. Système selon la revendication 16, dans lequel lesdits moyens de réduction de bactéries comprennent un contenant à réduction de bactéries (40) chauffé (42) pour chaque cabinet de toilettes à aspiration (12), chaque contenant à réduction de bactéries (40) étant situé de façon adjacente aux toilettes à aspiration associées (12) de telle sorte que les eaux noires soient éjectées essentiellement directement dans le contenant à réduction de bactéries (40).

17. Système selon la revendication 17, dans lequel lesdits moyens de fragmentation (52) sont agencés pour fragmenter les eaux noires au moins alors qu'elles sont présentes dans les contenants à réduction de bactéries (40).

18. Système selon l'une quelconque des revendications 16 à 18, dans lequel le système est raccordé à un système d'eaux usées, tel qu'un système d'égout public, pour libérer de la vapeur d'eau et/ou de l'eau condensée obtenue à partir de la boue d'eaux noires dans ledit système d'eaux usées.

19. Système selon l'une quelconque des revendications 16 à 20, comprenant en outre des moyens de fragmentation centraux (100) agencés en amont de l'unité de vaporisation (24) pour fragmenter davantage la boue d'eaux noires avant que la boue d'eaux noires soit reçue par l'unité centrale de vaporisation (24).

20. Système selon l'une quelconque des revendications 16 à 21, comprenant des moyens centraux supplémentaires d'élimination de matières solides (102), tels qu'un décanteur centrifuge, agencés en amont de l'unité de vaporisation (24) et agencés pour éliminer des matières solides à partir de la boue d'eaux noires avant que la boue d'eaux noires soit reçue par l'unité centrale de vaporisation (24).

21. Système selon l'une quelconque des revendications 16 à 22, comprenant des moyens centraux supplémentaires de traitement chimique (106) agencés en amont de l'unité de vaporisation (24) et agencés pour décomposer de la cellulose dans la boue d'eaux noires avant que la boue d'eaux noires soit reçue par l'unité centrale de vaporisation (24).
